(19) Europäisches Patentamt
European Patent Office
Office européen des brevets

(11) **EP 1 840 089 A1**

(12) **EUROPEAN PATENT APPLICATION**

(43) Date of publication:
**03.10.2007 Bulletin 2007/40**

(51) Int Cl.:
***C02F 1/04*** *(2006.01)*     *C02F 1/08* *(2006.01)*
*C02F 103/08* *(2006.01)*

(21) Application number: **06006977.0**

(22) Date of filing: **31.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Muzyrya, Oleg**
**CH-1073 Savigny (CH)**

(72) Inventor: **Muzyrya, Oleg**
**CH-1073 Savigny (CH)**

(74) Representative: **Bugnion Genève**
**BUGNION S.A.**
**Case 375**
**1211 Genève 12 (CH)**

(54) **Method of seawater desalination and the device for its implementation**

(57) The invention refers to a seawater desalination method and equipment and it may be used in industry, in housing, in medical industry and in chemistry and in agriculture, building industry, where distilled, potable and process water is needed. Desalination is brought about by vaporizing of seawater in a vacuum cavity, while thus generated vapors are condensed at the "dew point" with the pressure near normal atmospheric. This method of seawater desalination is implemented in a device (1) by evacuating the vapors from the vaporization chamber (7) into a condensation cavity (8) by a pump (4), adiabatic heating and compressing of vapors by said pump and creating in condensation cavity (8) temperature and pressure, conforming to the "dew point" conditions, to enable vapors condensation.

Fig.1

EP 1 840 089 A1

**Description**

The present invention refers to a seawater desalination method and equipment and it may be used in industry, in housing, medical industry and chemistry and in agriculture, building industry, where distilled, potable and process water is needed. Desalinated water is obtained by seawater vaporization in a vacuum chamber with the following condensation of vapor, thus obtained, in condensation chamber at the pressure higher or near to normal atmospheric.

There is known a method of seawater desalination (Maltsev V.V. RU № 2090511 MKI C 02 A 1/04, 1988), comprising seawater heating by a heater, vapors heating by a pump, water evaporation in vaporizer at the raised pressure of air-vapor mixture, injecting vapor from vaporizer into condenser due to the pressure difference between vaporizer and condenser, where the pressure is higher in vaporizer, water vapors condensation on the vaporizer side, additional heating of seawater, when vapors condense on vaporizer side.

There is known the seawater desalination device (Maltsev V.V. RU № 2090511 MKI C 02 A 1/04, 1988), comprising vaporizer cavity and communicated with it condenser cavity, incorporated into axially placed cylinders, with the pump over them, connection channel (gap) between lower edge of the pump and upper edge of common wall of vaporizer and condenser, the buoy over the vaporizer cavity.

There are some critical drawbacks, inherent to the known prototype:

1. In the vaporizer area, comprising narrow gap between vaporizer and the buoy walls, the pressure of the air and water vapors mixture is built up by the pump higher than atmospheric, which causes (with seawater temperature as low as 20°C) the inhibition of vaporizing process and the loss of its efficiency. The increase by the pump of the pressure over liquids (water) surface leads to the rise of this water vaporization temperature (the water vaporization temperature at normal atmospheric pressure is 100°C).

2. The pump, while building up the pressure, uselessly moves air-vapor mixture inside the closed cavity between the pump and the buoy, because of low efficiency of the blower in such a configuration. It is well known, that the blower efficiency depends on the ratio of the width of the gap, through which vapor is injected into the condenser cavity, to the pump diameter. The pump efficiency of the prototype method is very low, because of small ratio of the gap width to the pump diameter, which causes useless movement of air-vapor mixture.

3. The injected vapor mass is proportional as to the pressure difference between vaporizer and condenser cavities and to vapor concentration in the vaporizer and to pump efficiency as well. That is why the mass of the vapor, injected through the gap, is greatly diminished because of the low efficiency of the pump. The pump efficiency of the prototype method is very low, because of the small ratio of the gap width to the pump diameter, and, therefore, the vapor flow capacity is very small and injected vapor concentration in condenser is very low. Accordingly, only a small fraction of vapor is injected into condenser through the gap between pump and the upper edge of the vaporizer side, owing to the pressure difference between vaporizer and condenser, while most of vapor stays in the closed area between the pump and the buoy.

4. The concentration of vapor, produced over vaporizer surface by additional heating of seawater, is insufficient to support usable vapor generation capacity. This is caused by very small vaporization area (the ring surface between vaporizer side and the wall of the buoy) and by the increase of seawater evaporation temperature, when under the pressure (produced by pump) higher than atmospheric. I.e. resulting conditions of the prototype method do not support intensive evaporation. Thus, of all the vapor, generated in vaporizer, only a part of it, depending on vapor concentration in vaporizer, pressure difference and pump efficiency, will be injected into condenser cavity.

5. Of all the vapor, injected into condenser, only a small part will condense on vaporizer and condenser common wall. This follows from the small temperature difference between vapor injected and vaporizer and condenser common wall. This difference is small because of low vapor temperature at the increased pressure on one side and of high enough temperature of common wall, where condensation takes place, on the other. The high temperature of the common wall is caused by very low intensity of water evaporation and resulting lack of temperature difference between common wall and vapor injected.

6. In the prototype device for enabling high vaporization capacity seawater must be heated over 100°C. For reaching such a temperature a powerful seawater heater is needed. The use of such a heater greatly decreases the installation efficiency. The increase of vapor temperature by compressing, mentioned in prototype description, is hardly possible, for in this case the compressor with the power of some hundreds kW is needed.

7. The pressure difference, mentioned in the prototype, is necessary for vapor injection from vaporizer into condenser only, but not for vapor condensation as a process. The necessary conditions for vapor condensation are that the condenser vapor pressure must exceed that of vaporizer and besides of it critical values of vapor pressure and temperature difference between vapor and the common wall must be reached for condensation process to take place. All these conditions are absent in the prototype. Thus, because of said shortcomings, which greatly decrease overall efficiency of said desalination installation and because of thermodynamic conditions of said processes in prototype, it is apparent that the installation using said method and construction do not provide usable distillate production capacity.

Said prototype construction features the following shortcomings:

1. The placement of the pump over the vaporizer cavity, where vaporizer and condenser are communicated through the channel (the gap), formed by the lower edge of the pump and the upper part of vaporizer side. With a given layout of main components of desalination installation, when pump increases the pressure in vaporizer cavity, the conditions of main processes of desalination, such as evaporation and condensation, are greatly changed to worse. With such placement of the pump and its low efficiency the pressure in vaporizer greatly increases and concentration of injected vapor in condenser area greatly diminishes. As the pressure difference between vaporizer and condenser areas deteriorate evaporation and condensation processes conditions, mentioned in prototype, the pump work results in injection through the channel only a small part of vaporized seawater.

2. The said placement of a buoy in vaporizer cavity, where vaporizer comprises the area between interior wall of the vaporizer and exterior wall of the buoy. Such a layout leaves too small an area of seawater surface for vaporization, what leads to low water vapor concentration in vaporizer cavity and small amount of vapor, injected into condenser area.

3. The prototype condenser construction. It consists of common wall between vaporizer and condenser cavities, on which vapors, injected from vaporizer, condense. With such a construction, condenser presents too small an area for condensation of vapors injected.

Accordingly, such installation will output too small quantity of desalinated water. Thus, taking into account all these Shortcomings, it is hardly possible to create conditions, necessary for intensive seawater vaporizing, high temperature vapor injection through the gap into condenser, outer wall of vaporizer cooling and vapor condensation on said wall, and therefore to obtain usable output of the distillate. All others additional elements of this construction are excessive, as they are not included in main processes of vaporizing and condensation.

The object of this invention refers to elimination of afore said drawbacks of said method and device, the increase of device and method of seawater desalination efficiency, simplifying of the construction and the increase of distillate or potable water output. In accordance with well known thermodynamics laws for intensive liquid evaporation the liquid must be heated in vaporizer to the temperature, exceeding this liquids evaporation temperature (at the rated pressure) or to decrease the pressure in vaporizer at the rated temperature of the liquid. Thus it is proposed in the construction, similar to above mentioned, not to compress air-vapor mixture in vaporizer, but to the contrary to decrease the pressure over the seawater to be vaporized. In this case the seawater of certain temperature entering the vaporizer, starts to vaporize intensively, for under the low pressure the vaporization temperature of seawater is greatly decreased. This low pressure is produced by pumping vapor out of vaporizer by pump, Thus, when the air pressure over the water is lowered down from 0,1 atm to 0,01 bar water evaporation temperature falls from +44°C to +8°C. This means that in the case under discussion to vaporize seawater coming at the temperature 20°C the pressure decrease to 0,03bar is sufficient. This also means that seawater posses enough thermal energy to start vaporize without its preheating. The vapor should be pumped from vaporizer into condenser via a channel. This channel should comprise of pump and the condenser chamber must communicate with vaporizer via pump. In such a layout the pump efficiency becomes nearly 100%, for the channel diameter may be comparable with that of the pump and the pump increases the vapor pressure in condenser chamber, thus enhancing the vaporization and condensation conditions. It is a common practice (in cryogenics) for reaching the critical values to simultaneously decrease the temperature and raise the pressure. In the proposed desalination device two simultaneous processes take place: the decrease of the vapor temperature and the increase of its pressure. The vapor pressure in condenser is increased by pump and vapor temperature is decreased, when it contacts with cool vaporizer walls. Thus the pressure difference between vaporizer and condenser chambers is produced with the gradient directed to condenser chamber. While the vapor temperature is lowered by contact with vaporizer walls, the seawater in vaporizer is preheated by the heat of the walls, received from vapor. When certain values of vapor pressure and temperature (critical conditions of condensation or "dew point") are reached, the vapor condensation process starts, which outputs distilled water. In such combination of three main components of the proposed desalination installation the pump now executes several functions: 1) pumps seawater from exterior into vaporizer; 2) reduces the pressure in vaporizer to enable seawater to vaporize; 3) pumps vapor from vaporizer into condenser via a channel; 4) serves as a channel communicating vaporizer and condenser; 5) preheats pumped vapor by adiabatic process; 6) pumps vapor into condenser under the pressure, at which condensation condition ("dew point") is complied; 7) serves as a controller for partial brine recuperation, outputs the brine and distilled water into the surroundings, controls vapor pressure in condenser. For reaching optimal conditions for evaporation and condensation the heat transfer from vapor to seawater through the common wall of vaporizer and condenser must be brought off with maximal efficiency. For effecting such a heat transfer in the proposed device the well known construction unit "tube in the tube" is used. This unit provides the logical combination of vaporizer and condenser into a complete system. To increase the heat transfer the surface of vapor contact with vaporizer walls must be increased. For this purpose a lot of such units are used. In this case the areas of evaporation and condensation are enlarged many times if compared with seawater area. This unit comprises of two coaxial tubes. The gap between vaporizer and condenser tubes at the upper end of this unit is sealed with a ring plate. Overall length of vaporizing and condensing parts of the unit makes up to 0.5m and more. Outer diameter of the unit is 0.03m. This unit is installed in vaporizer vertically. The seawater, thanks to the pressure difference between vaporizer and condenser, produced by compressor, climbs up the inner wall of the vaporizer tube, spills over the upper end of the unit and comes down as a water film on the outer wall of condenser tube. When the seawater moves up the vaporizer tube and runs down along the outer wall of condenser tube, the heat transfer from vapor to the seawater takes place. As a result the seawater is preheated and vaporizes more intensively in the vaporizer chamber, where the pressure is lowered down. While the seawater vaporizes on vaporizer tube walls, their temperature falls down, thus intensifying the condensation of vapor in between tubes. Resulting water condensate is output from the desalination installation due to the pressure difference between condenser and surroundings and the brine is forced out by hydrodynamic pressure of the brine in vaporizer. Both are output through the valves in the vaporizer and in the condenser, switched on or off simultaneously. This is the way the proposed device provides for efficient heat transfer and optimal conditions for vaporizing and condensation.

The proposed technical solution differs from the method of seawater desalination, comprising seawater pre-heating, vapor heating by compressor, creating by said compressor the pressure difference between vaporizer and condenser chambers, with higher pressure in vaporizer, seawater vaporizing at the increased pressure, vapor injection from vaporizer into condenser, condensation of water vapor, additional heating of seawater by the heat of condensing vapor, in that the vaporization chamber communicates with condenser chamber via compressor (pump) with the pump input connected to vaporizer chamber and the pump output connected to the condenser chamber, the salt water is fed into vaporizer due to the pressure difference between vaporizer and surroundings, produced by pump, pumping the air-water mixture from the vaporizer into condenser chamber, lowering down the pressure in vaporizer and rising the pressure in condenser, simultaneously the salt water is fed into the salt water tank, from where it comes into vaporizer tubes and further on into vaporizer chamber, where it comes down as water film along the outer walls of condenser tubes, said film vaporizing in the process, cooling the vaporizer tubes walls, on inner sides of which vapor, pumped under the pressure and heated, transfers its heat to the inner sides of vaporizer tubes, thus heating the salt water film on its outer sides and the salt water inside the vaporizer tubes, with the vapor and saltwater flows moving in opposite directions, and pump builds up the pressure to the critical value for given temperature, when "the dew point" is reached and condensation process starts and the resulting distillate and the brine are output through the compensation tanks with distillate and brine pressure controllers, by periodic opening and closure of pressure valve and connected to it hydrodynamic valves. The attainment of "the dew point" takes place in the presence of air and gases, dissolved in the salt water or seawater. Additional heating of seawater in vaporizer chamber is done for potable water production. The distillate and the brine are output due to the pressure difference between vaporizer and condenser chambers and the surroundings through separate channels and the pressure in condenser chamber is controlled by pressure valve.

This technical solution is attained by that the device for seawater desalination, comprising pump, placed over vaporizer and condenser, pre-heater, coaxially placed cylinder cases with ribs and covers and vaporization and condensation cavities, communicated via a common channel, differs in that the pump is placed between cavities and pump input is directed into vaporization cavity, while its output is connected with condensation cavity and this pump pumps seawater vapor from vaporizer into condenser, while vaporizer and condenser are the structural unity, comprising of multitude of "tube in the tube" units, the upper parts of which are sealed, with the hole in the center open to vaporizer cavity, and the lower ends of inner tubes open to seawater, while lower ends of outer tubes open into condenser cavity. There is additional heater to produce potable water. The device comprise of outlet tubes with hydrodynamic pressure valves to output the distillate from condenser chamber and the brine from vaporizer chamber, communicated via the valve pressure switcher and the pressure tube from condenser chamber. It also comprises of compensation pressure tanks for the brine and for the distillate, connected via valve switchers with outlets from vaporizer cavity for the brine and from condenser cavity for the distillate. It also comprises of the valve pressure switcher in condenser cavity to alternatively control hydrodynamic pressure valves and output valves for the brine and the distillate.

The principle of the invention will better exposed with the help of drawings, where in

Fig.1 the front sectional view of desalination installation is shown,
Fig.2 the front sectional view of vaporizer-condenser unit construction is shown
Fig.3 the overall view of vaporizer-condenser unit construction is shown ,

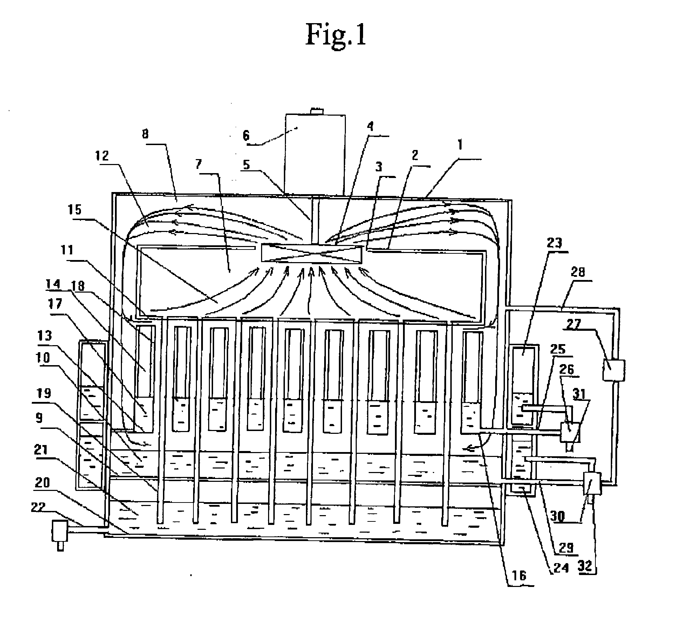

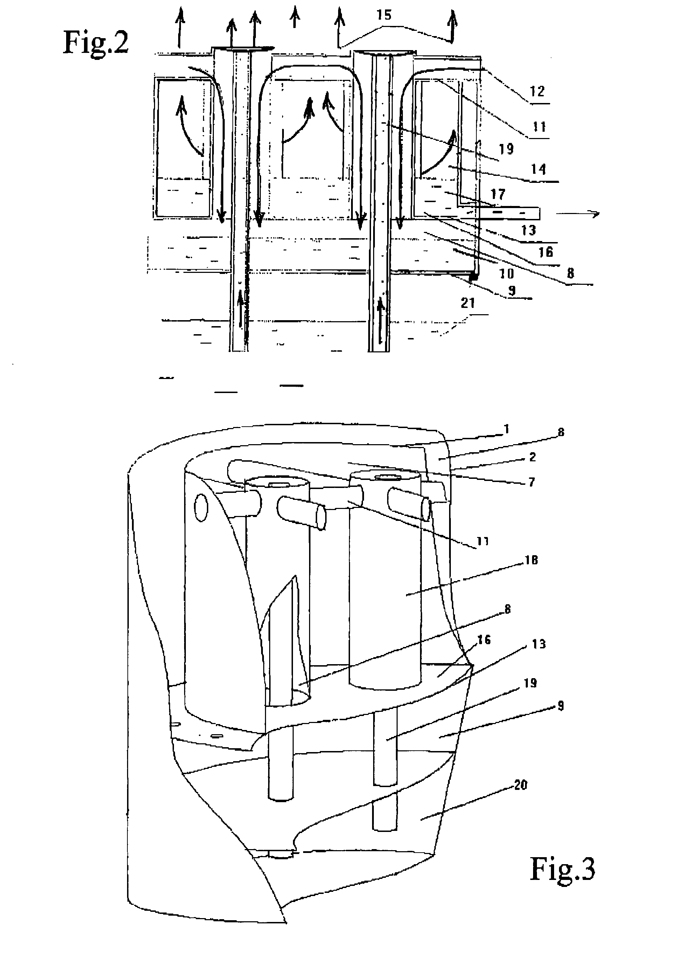

The device for the proposed method implementation comprises of two cylinder cases, with coaxially placed condenser case 1 and vaporizer case 2 with channel 3 in the upper part of case 2. A pump 4, connected by a shaft 5 to electric motor 6 and placed on outer upper side of case 1, is fixed airtight in channel 3 (Fig.1). The vaporizer cavity 7 is located in case 2 and in case 1 the condenser cavity 8 is located. In lower part of cavity 8 tank 9 for distillate 10 is located (Fig. 2; 3). In case 2 input collector tubes 12, opening into vaporizer cavity 7, are fastened airtight. A tube plate 13 is fastened in case 2 creating vapor space 14 for vapor 15. A lower tank 16 for the brine 17 is located there too (Fig. 2). The upper butts of condenser tubes 18 are vertically and airtight installed in horizontal collector tubes 11. The lower butts of condenser tubes 18 are airtight installed into tube plate 13, communicated with condenser cavity 8. In tubes 18 vaporizer tubes 19 are installed coaxially with upper ends opened into vaporizer cavity 7 and fastened airtight to tubes 18 by ring plates and with the lower ends entering tank 20 for salt water 21, which is fed through the inlet connection 22. Around case 1 tank 23 for the brine and tank 24 for the distillate are rigidly fastened. In tank 16 outlet 25 with valve distributor 26 and pressure outlet 28 with pressure valve switcher 27 are installed rigidly and hermetically. The tank 9 is communicated with valve distillate distributor 30 via outlet 29.The distributing valves 26 and 27 are fitted with outlets 31 and 32 to drain the brine 17 and the distillate 10 accordingly (Fig. 1).

The seawater desalination is executed as follows:

The electric motor 6 is switched on and pump 4 pumps out the mixture of air and vapor 15 with the temperature of salt water 21 in vapor space 14 from vaporizer cavity 7 of case 2, compressing vapor 15 by pump 4 and converting it by adiabatic compression into condensation vapor 15 of higher temperature, which is injected into cavity 8 via the channel 3. From cavity 8 under the pressure built up by pump 4, condensation vapor 12 is injected into condenser tubes 18, where conditions of "the dew point" were created (when the pressure was built up and the temperature lowered down) and where this vapor giving its heat to inner walls of vaporizer tubes 19 and inner walls of tubes 18 (on outer walls of which salt water film 21 is coming down) is converted into liquid i.e. distillate 10, which is accumulated in tank 9. Simultaneously with the pumping of vapor 15 from vapor space 14, salt water 21 with the temperature of surroundings is fed from tank 20 into vaporizing tubes 19, due to the fall of the pressure in the cavity 7. In tube 19 salt water 21 comes up to the end of tube 19 and flows through its open end down the outer wall of tube 18 as a water film. Due to the heat transfer through the walls of tube 18 (inside of which is passing vapor 12 of high temperature) the water film is heated up and vaporized as vapor 15, which gets into vapor space 14 of vaporizer cavity 7 and thus closing vaporization-condensation cycle. Simultaneously with this process, the distribution of the brine 17 and the distillate 10, enabled by the pressure difference between cavities 7 and 8 (produced by the pump) and between cavities and the surroundings, is effected through outlets 25 for the brine and 30 for the distillate into compensation tanks 23 and 24 accordingly. When the pressure of vapor 12 in cavity 8 is raised then it raises in valve pressure switcher 27, connected by branch tube 28 with cavity 8, with said switcher opening valve distributor 26 and closing valve distributor 31. In this case distillate 10 in tank 9 is output into compensation tank 24 via branch tube 30, which leads to lowering of vapor 12 pressure. When the pressure of vapor 12 is decreased, pressure valve 27 toggles back, forcing valve 26 to close and valve 31 open. As a result, brine 17 is drained via outlet 25 into compensation tank 23. Simultaneously brine 17 and distillate 10 is output through outlets 31 and 32 into the surroundings.

The efficiency of proposed method and device for seawater desalination is based on maximal heat transfer rate due to the opposite directions of seawater and vapor flows in vaporizer tubes and due to enhanced pressure difference between vaporizer and condenser cavities, Such a layout enables the integration of the heat source and the heat exchanger with common working medium in limited volume, enhancing compressor efficiency and building up distillate production capacity. The invention provides for cutting of heat losses by factor of four in medium temperature range (20°C - 60°C), increasing seawater desalination capacity twice and cutting down production costs.

The calculations below confirm the enhancement of proposed desalination device parameters.

Estimation calculations of device dimensions

h := 0.5 - vaporizer height (m)

$s_i$ :=1 - vaporizer area ($m^2$) R:

$$R := \frac{s_i}{6.28h} = 0.3184713376 \text{ -vaporizer radius (m)}$$

$S_c$ := 5 $S_i$ = 5 overall condenser area ($m^2$)

$V_0$ ;= 0.8 - water film velocity in vaporizer (m/s)

$V_m$ := 30 - mass flow rate of incoming seawater (g/c)

**Calculation of parameters of two chamber desalination device with lowered pressure**.

Operational parameters of the device. Thermal parameters of water and vapor in the device.

$R_v$ := $2.5 \cdot 10^6$- specific vaporization heat (pressure limits 0.01-1.5 bar and temperature limits 10 - 100°C) (J/kg)

$V_v$ := $1 \cdot 10^{-3}$- specific water volume (pressure limits 0.01-1.5 bar and temperature limits 10 - 100°C) ($m^3$/kg)

$I_p$ := $2.5 \cdot 10^6$ - specific vapor enthalpy (J/kg) (temperature limits 10 -100°C)

$S_p$:= 8.6·10³ - specific vapor entropy (J/kg ·K) (temperature limits 10 - 100°C)

$c_{pv}$ := 4.2·10³ specific water heat (J/kg ·K) (temperature limits 10- 100°C)

$c_{pp}$ := 1.87·10³ specific vapor heat (J/kg ·K) (temperature limits 10 - 100°C)

$L_v$ := 0.602 water thermal conductance (W/ m ·K) (temperature limits 10 - 100°C)

$L_p$ := 0.188·e⁻¹ vapor thermal conductance (W/m ·K) (temperature limits 10 - 100°C)

$M_v$ := 1·10⁻³ water dynamic viscosity (N·/m ·s) (temperature limits 10 - 100°C)

$V_i$ := 1.10⁻⁶ water cinematic viscosity (N·/m ·s)

$M_p$ := 8.8 ·10⁻⁶ vapor dynamic viscosity (N·/m ·s) (temperature limits 10 - 100°C)

$s_i$ := 7.2·10⁻² water surface tension (N·/m) (temperature limits 10 - 100°C)

g := 9.8 - acceleration of gravity (m/c²)

$T_{cr6}$ := 30 - water vaporization temperature (°C) at the pressure of 0.01 bar

$P_{v6}$ := 0.4·e⁻¹ - vacuum chamber pressure (bar) for water vaporizing temperature $T_{cr1}$

$V_{p6}$ := 32.929 - specific vapor volume (m³ / kg) at the pressure 0.01 bar and vaporization temperature of 20°C

$I_{v6}$ := 1.256·10⁵ - specific water enthalpy (J/kg) at the temperature of 20°C

$S_{v6}$ := 4.3·10² - specific water entropy (J/kg) at the temperature of 20°C

**The determination of conditions for spontaneous water vapors condensation in desalination device**

$M_{u1}$ := $i_1$ - $s_1(T_c + 273)$ = - 4690.0 - water chemical potential on saturation line (J/kg)

$M_{u2}$ := $i_2$ - $s_2(T_c + 273)$ = - 105800.0 - vapor chemical potential on saturation line (J/kg)

T := 65.0 - the temperature of heated water (°C)

$i_{v1}$ := $cp_1 T + v_1 P_c$ = 273004.0 - water enthalpy in vacuum, when heated up to temperature T

$$i_{v2}m = c_{p2}\, T + v_2\, P_c\, \left(\frac{T_c}{T}\right)^{\left(-\frac{2.8}{.4}\right)} = 122137.6 - \text{vapor enthalpy in vaccum, when adiabatically expanded, while heated}$$

up to temperature T

R := 287.0 - gas constant (J/kg ·K)

$$M_{u1t} := i_{1t} - s_1 T - \frac{R(T+273)v_1}{v_2} = 245051.0 - \text{water chemical potential in vacuum, when heated up to temperature T}$$

(J/kg)

$$M_{u2t} := I + R(T+273)\, \ln\!\left(\left(\frac{T_c}{T}\right)^{-\frac{1.4}{.4}}\right) - s_2 T = \text{-174348.0 - vapor chemical potential in vacuum, when adiabatically}$$

expanded, while heated up to temperature T (J/kg)

$M_{ug}$:=$M_{u1t}$-$M_{u2t}$=419399.2

$q_{pt}$ := $c_{pt}$ ·$T_c$ = 126000.0 - the heat quantity, necessary for isobaric heating of water up to the boiling temperature $T_c$ (J/kg)

$q_{p0}$ := $i_1$ = 125600.0 9J/kg)

$u_1$ := $i_1$ - $P_c v_1$= 125596.0 - internal water energy at the pressure $P_c$ (J/kg)

$u_2$ := $i_2$ - $P_c v_2$= 0.2 · 10⁷ - internal vapor energy at the pressure $P_c$ (J/kg)

$r_1$ := $u_2$ - $u_1$ + $P_c$ ($v_2$ - $v_1$) = 23 · 10⁷ - specific vaporization heat (J/kg)

$d_1$ := $i_2$ - $i_1$= .23 ·10⁷ - specific vaporization heat, when vaporization takes place in isobaric / isothermal conditions (J/kg)

$r_1$ := $d_1$= .23 ·10⁷

$v_p$ := 30.78 - specific overheated vapor volume at 60°C (J/kg)

$i_p$ := 2612 ·10⁶- overheated vapor enthalpy at 60°C (J/kg)

$s_p$ := 8.549 ·10³ - overheated vapor entropy at 60°C (J/kg ·K)

$q_{p2}$ := $i_p$ - $i_2$= 112000.0 - the heat quantity, needed to overheat vapor to 60°C (J/kg)

$i_v$ := $c_{pt}$ ·T = 273000.0 - water enthalpy, when heated to 60°C (J/kg)

$M_{up}$ := $i_p$ - $s_p(T+273)$ = 277562.0 - overheated vapor chemical potential

$M_{uv}$ := $i_v$ - $s_1 T$ = 245050.0 - chemical potential of water, when heated to 60°C (J/kg)

2.549 ·10⁶-8.58 ·10³ (24 + 273) - thermal boundary of space condensation at the pressure $P_c$ = 0.03 bar and the temperature 24°C.

$i_{c2} := 2.549 \cdot 10^6$ - specific vapor enthalpy at the pressure $P_{c1} =: 0.03$ bar and the temperature $T_{c1} = 24°C$ (J/kg).

$s_{c2} := 8.58 \cdot 10^3$ - specific vapor entropy at the pressure $P_{c1} = 0.03$ bar and the temperature $T_{c1} = 24°C$ (J/kg ·K).

$T_{c1} := 24$ - thermal boundary of space condensation at the pressure $P_{c1} = 0.03$ bar (°C)

$i_{c1} := 1.006 \cdot 10^5$ - specific condensate enthalpy at the pressure $P_{c1} = 0.03$ bar and the temperature $T_{c1} = 24°C$ (J/kg).

$S_{c1} := 3.53 \cdot 10^2$ - specific condensate entropy at the pressure $P_{c1} = 0.03$ bar and the temperature $T_{c1} = 24°C$ (J/kg·K).

$V_{c1} := 1.0 \cdot 10^{-3}$ - specific condensate volume at $T_{c1}$ and $P_{c1}$ (m³/kg)

$V_{c2} := 45.923$ - specific vapor volume at $T_{c1}$ and $P_{c1}$ (m³/kg)

$M_{uc1} := i_{c1} - s_{c1}(T_{c1}+273)$ - chemical potential of condensate at $T_{c1}$ and $P_{c1}$ (J/kg).

$M_{uc2} := i_{c2} - s_{c2}(T_{c1}+273) = 740.0$ - chemical potential of condensate at $T_{c1}$ and $P_{c1}$ (J/kg).

$M_{uc} := M_{uc1} - M_{uc2} = -4981.0$ - chemical potentials difference between condensate and vapor at $T_{c1}$ and $P_{c1}$ (J/kg).

$S$:

$$= 4 \cdot P\left(\frac{3mv_{c1}}{4P_1}\right)^{\left(\frac{2}{3}\right)} = 0.1 \cdot e^{-7} \cdot \pi \cdot 3^{\left(\frac{2}{3}\right)} \cdot 4^{\left(\frac{1}{3}\right)} \cdot \left(\frac{lm}{\pi}\right)^{\left(\frac{2}{3}\right)}$$ - condensate drop of mass $m$

(kg) surface area

$dG_m$ :

$$= -m \cdot M_{uc2} + S_m \cdot \sigma_1 = -740.0 \cdot m + 0.72 \cdot e^{-3} \cdot \pi \cdot 3^{\left(\frac{2}{3}\right)} \cdot 4^{\left(\frac{1}{3}\right)} \cdot \left(\frac{lm}{\pi}\right)^{\left(\frac{2}{3}\right)}$$ - specific free

energy of the vapor-liquid system (J/kg)

$$k_{?or?} := \frac{\partial}{\partial m} \, dG_m = -740.0 + \frac{0.48 e^{-3} 3^{\frac{2}{3}} 4^{\frac{1}{3}}}{\left(\frac{lm}{\pi}\right)^{\frac{1}{3}}}$$

$m := solve(k_{?or?}, m) = 0.31 e^{-16}$ - critical mass of volume condensation (kg)

$$r_1 := \frac{2v_{c1}\sigma_1}{M_{uc2}} = 0.19 \cdot e^{-14}\pi$$ - critical condensate free energy (J)

$$Z := \left(\frac{dG_C}{3\pi R(T_{c1} + 273)m_1}\right)^{\left(\frac{1}{2}\right)} = .12\, e \cdot 3^{\left(\frac{1}{2}\right)}$$ - Zeldovich factor, determining space condensate, with its limits:

$10^{-1} - 10^{-2}$.

$P_{c1} := 3 \cdot 10^3$ - vapor pressure (Pa) (J/m³ or N/m²)

$m_2 := 1 \cdot 10^{-27}$ - vapor molecular mass (kg)

$k_b := 1 \cdot 10^{-27}$ - Bolzman factor (J/K)

$a_c := 1$ - condensation factor

$$n_1 := \frac{P_{c1}}{k_b T_{c1}} = .125 \cdot 10^{26}$$ - vapor molecules concentration (1/m³)

$S := 4 \pi r_1^2 \pi = .15 \cdot 10^{-12} \pi$ - vapor molecule interaction with condensate drop cross-section (m²)

$$V_m := \left(\frac{8k_b T_{c1}}{m_2}\right)^{1/2} = 1385.6$$ - thermal velocity of vapor molecules (m/c)

$C_{il} := a_c S_1 V_m n_1 = .26 \cdot 10^{16} \pi$ - the frequency of collisions of vapor molecules with condensate drops (1/s)

$R_m := 1 - 39 \cdot 10^{-10}$ - water molecule radius (m)

$$I_1 := Z_c \, c_{il} \, S_1 \, n_1 \, e^{\left(\frac{4\pi\sigma_1 r_m^2}{3k_b T_{cl}}\right)} \doteq .6 \cdot 10^{26} 3^{1/2} \cdot \pi^2 \, e^{-7.7283\pi}$$ - the intensity of spontaneous flow vapor molecules nucleation in space vapor condensation (1/s·m$^2$)

The equation solution: $0.3003401353 \cdot 10^{17}$

$$dM_t := \frac{4\pi l_1 r_1^3}{3v_1} = 604686487.8 \, \pi^3 \, 3^{1/2} \, e^{-7.728399998\pi}$$ - mass velocity of spontaneous space vapor condensation near the condenser surface (kg/s)

$dM_t := .93$ - mass velocity of space condensation (kg/s)

**Enforced drop vapor condensation conditions determination**

$R := \dfrac{\lambda_1 (T_{i2} - T_h)}{r \mu_1} = .1008 \, e^{-1}$ - Reynolds number for condensate flow in drop condensation

$K_{st} := 3.24 \cdot 10^{-3}$ - surface tension thermal factor with temperature in the limits of 20 -30°C (1/K)

$$P_l := \frac{2 K_{si} \sigma_1^2 T_{i2}}{r \mu_1^2} = .477 \cdot e^{-2}$$ - Marangony number for surface drop condensation

$N_{uk} := 5 \cdot 10^{-6} \, R_{ek} \, P_k \, P_{r1}^{1/3} = .2 \cdot e^{-4}$ - Nusselt number for drop condensation

$$A := \frac{N_k \lambda_1 r (T_{i2} - T_h)}{2 \sigma_1 v_1 T_{i2}} = 27421.4$$ - the factor of heat transfer from condensate to condenser walls in drop condensation

(W/m$^2$·K).

$$A := 4/3 \cdot \left(\frac{r g \lambda_1^3}{4 v_1^2 \mu_1 (T_{i2} - T_h) 3 H}\right)^{1/4} = 4351.9$$ - the factor of heat transfer from

condensate to condenser walls in film condensation (W/m$^2$·K).

$$F := \frac{a_{kc}}{a_{cp}} = 6.3$$ - the enhancement of heat transfer from condensate to condenser walls in drop condensation as compared with film condensation For the determination of space condensation conditions the concepts of chemical potential for liquid and vapor at given temperature and pressure in vaporization and condensation chambers and concepts of wetting the surface by liquid process as well are used. When liquid is vaporized from the surface of vaporizer at the pressure, conforming the saturated vapor pressure, two opposite processes take place: merging of molecules into liquid drops and vaporizing of said drops, If the liquids temperature is high enough and exceeds that of saturated vapor $T_c$ at a given pressure $P_c$, overheated vapor may give up its energy in condenser onto condensation processes. But most of the vapor is at the temperature equal or lower than saturation temperature $T_c$. Remained vapor energy may be spent on space condensation for overcoming the difference of chemical potentials between vapor and liquid and overcoming the molecular tension forces. As this takes place, spontaneous condensation of vapor into liquid drops with some critical dimensions $r_1$ may occur. The probability of such occurrences depends on the amount of free energy, which is determined by chemical potentials of liquid and vapor and by liquid surface tension of a drop with the radius $r_1$. Due to the vaporization and condensation processes the drops number and its dimensions vary. When moving away of the vaporizer surface the number and size of such drops are growing, as condensation process starts to prevail on vaporization. But vapor spends its energy on expansion and at some distance from vaporizer $l_i$ the number of space condensation drops reaches its maximum and when the distance grows further on, the space vaporization processes begin to prevail on processes of drops generation. Calculations show, that water boundary pressure and temperature parameters for space condensation are equal $T_c = 24$°C and $P_c = 0.03$ bar ($3 \cdot 10^{-3}$ Pa). According to experimental results, the distance of maximum space condensation area from the vaporized liquid surface make up about 0.03m. The mass space condensation velocity is determined by calculations too. If to neglect evaporation processes in just formed liquid drops, then mass space condensation velocity may reach considerable values up to $M_t = 0.93$ kg/s.

In enforced space condensation process, when condensate drops originate near condenser surface, the heat transfer factor is several times larger than that of film condensation. Therefore, mass space drop condensation velocity will several times exceed mass film condensation velocity.

$R_{e1} := 100$ - Reynolds number for water film wave movement on vertical plane in gravitation field

$R_{e2} := 1500$ - Reynolds number for water film turbulent movement on vertical plane

$$V_0 := \frac{gh^2}{3v_1} = 3266666.666 \ h2 \ \text{characteristic film flow velocity on vertical plane (m/s)}$$

$C_f := 3 \ V_0 = 9799999.998 \ h2$ - wave movement phase velocity (m/s)

$$K := \left(\frac{4.2V_0^2}{V_v s_1 h}\right)^{1/2} = 7.9.10^8 (h^3)^{1/2} \text{ - wave water film movement coefficient}$$

$V := .6V_0 \ k_f \ h = .15 \cdot e^{16} \ h^3 (h^3)^{1/2}$-lateral wave movement velocity (m/s)

$$h_1 := \text{solve}\left(V_0 = \frac{R_{el}v_l}{h}, h\right) = -.1564113979 \ e^{-3} - .2709124880 \ e^{-3}I - .1564113979$$

$e^{-3} + ((.2709124880e^{-3} \ I).3128227.957)$-water film thickness in initial condition for wave movement

$h_1 := .3 \ e^{-3}$

$$h_2 := \text{solve}\left(V_0 = \frac{R_{e2}v_i}{h}, h\right) = -.33857438780 \ e^{-3} -.6681276490 \ e^{-3}I - .3857436780 \ e^{-3} + ((.6681276490e^{-3}1) .$$

$7714873.559)$-water film thickness in final condition for wave movement

$h_2 := .77 \ e^{-3}$

$$V_{01} := \frac{gh_1^2}{3v_i} = .294 \text{ - water film velocity in initial condition for wave movement (m/s)}$$

$$V := \frac{gh_2^2}{3v_i} = 1.936806666 \text{ - water film velocity in final conditions for wave movement (m/s)}$$

$$k_{f1} := \left(\frac{4.2V_{ol}^2}{V_v s_i h_1}\right)^{(1/2)} = 4099.6 \text{ - the wave number for wave movement (m/s)}$$

$$k_{f2} := \left(\frac{4.2V_{o2}^2}{V_v s_i h_2}\right)^{1/2} = \text{the wave number for turbulent movement (1/m) } V_{p1} := .6V_{k1}, \ k_{f1} \ h_1 = .22 \text{ lateral wave velocity on}$$

condition 1 (m/s)

$V_{p2} := .6 \ V_{o2} \ k_{f2} \ h_2 = 15,1$-lateral wave velocity on condition 2 (m/s)

$V_{og1} := (g \ h_1)^{1/2} = .54 \cdot e^{-1}$- characteristic velocity for turbulent movement on condition 1 (m/s)

$V_{og2} := (g \ h_2)^{1/2} = .54 \cdot e^{-1}$- characteristic velocity for turbulent movement on condition 2 (m/s)

**The heat transfer from vaporizer walls and water film, flowing down this walls. Conditions of heating up of seawater, flowing down vaporizer surface**

$W := 3.7 \cdot 10^4$ - the heat source capacity (W)

$S := 3.14(4 \cdot 10^{-2})^2$ - the cross-section area of the heat source output pipe. (m2)

$$q_i := \frac{W_i}{S_v} = 7364679.6 \text{ - the heat flow capacity of the source (W/m2)}$$

$T_i := 90+273$ - heat carrier temperature (K)

$T_{l1} := 25+273$ - the temperature of the water film entering vaporizer (K)

$T_{l2} := 25+273$ - the temperature of the water film on vaporizer, if cooling by vaporization is neglected (K)

dT := 30 - the temperature difference between vaporizer wall and seawater film.

$a_i := \dfrac{q_l}{T_i}$ = 20288.3 - the coefficient of heat transfer from hot heat carrier to internal surface of pipeline (W/m² K)

$L_a$ := 330 - heat conductance of pipeline material (W/m K)

$a_{ls} := \dfrac{L_a}{3 \cdot 10^{-3}}$ = 110000.0 - the coefficient of heat transfer from hot heat carrier to internal surface of pipeline (W/m² K)

h := 2·10⁻³ - seawater film on vertical wall thickness (m)

$V := \dfrac{gh^3}{3v_1}$ = .26 °e⁻¹ - the laminar and wave seawater film flow velocity on vertical wall (m/s)

$R_{el} := \dfrac{V_0 h}{v_1}$ = 52.26 - Reynolds number for laminar water film flow on the vertical wall

$P_{r1}$ := 4.3 - Prandtle number for water at the temperature 10 - 60°C

$P_{r2}$ := .9 - Prandtle number for vapor at the temperature 60°C

$N_1$ := 37·e⁻¹ - Nusselt number for laminar down flow of water film on the vertical wall

$A := \dfrac{N_1 \lambda_1}{h}$ =445.1 - the efficiency of heat transfer from the wall to water film (W/m² K)

$L_1$ := .5 - vaporizer tube length (m)

$G_1 := \dfrac{V_0 h\, L_1}{v_1}$ = .26·e⁻¹ - mass velocity of laminar down flow of water film on the vertical tube wall (kg/s)

$q_1 := G_1\, C_{pl}\, dT_l$ = 3292.8 - heat capacity, transferable from vaporizer tube to seawater film (W)

$dT_l:$ $= \dfrac{T_i - T_{i2} - (T_l - T_{i1})}{\ln(\dfrac{T_i - T_{i2}}{T_l - T_{i2}})}$ $= \dfrac{1}{\ln(\dfrac{6}{13})}$ - mean logarithmic temperature of water film

and the wall.

$dT_{ll}$ := 45.26

$H := \dfrac{Q_l}{a_{ll}\, dT_{ll}\, L_1}$ = .326 - the length at which water film flows down, until is heated up to 60°C.

R := 1500 - Reynolds number, when the water film down flow on the vertical surface becomes turbulent

$L := \dfrac{R_2 v_1}{V_0}$ = .57·e⁻¹ - the length of the tube, after which the water film down flow becomes turbulent (m)

N := .27·e⁻¹ $R_2^{.8}$ $P_r^{.43}$ = 13.6 - Nusselt number for water film turbulent down flow on the vertical surface

$a_{il} := \dfrac{N_2 \lambda_1}{h}$ = 4303.2 - the efficiency of heat transfer from tubes wall to water in turbulent flow (W/m² K).

$H_2 := \dfrac{Q_l}{a_{ll}\, dT_{ll}\, L_1}$ = 3·e⁻¹ - the additional to the distance H length, for water to be heated up to 60°C (m)

$l_0 := l_1 + H_2$ = .91·e⁻¹

**The heat transfer in the process of vaporizing of water, flowing down the vertical vaporizer wall and the mass vapor velocity In vaporizing from the wall of vaporizer.**

$P_{ch} := .3 \cdot e^{-1}$ - pressure in vaporizer chamber (bar)

$a_t := a_{tl} \ T_{i2} = 1432974.708$ - heat flow, necessary to heat seawater film up to $T_{l2}$ (J/s)

$a_{kl} := 3 \cdot q_l^{-.7} P_{cb}^{.15} = 36145.68$ - heat transfer coefficient of seawater film, while vaporizing (W/m$^2$ K).

$$dT_k :\!:= \frac{q_l}{a_{kl}} + 273 = 312.64 \text{ - temperature pressure (K)}$$

$a_{tl}/a_{kl} = .12$ - the ratio of turbulent heat transfer efficiency to that of heat transfer by vaporizing.

$a_0 := a_{tl} \ (1 + (a_{tt}/a_{kl})^2)^{.5} = 36400.9$ overall efficiency of vaporizing water film heat transfer with vaporizer wall in turbulent flow (W/m$^2$ K)

$T_{k0} := 25 + 273$ - water film temperature on leaving vaporizer panel (K)

$$dT_{lk}; = \frac{T_{l2} - dT_k (T_{i2} - T_{k0})}{\ln(\frac{T_{l2} - dT_k}{T_{i2} - T_{k0}})} = 27.0 \text{ - mean logarithmic temperature of water film flowing down the wall.}$$

$$H_3 := \frac{Q_1}{a_0 dT_{ik} \cdot 5} = .67 \ e^{-2} \text{ - the distance, at which flowing down film vaporizes (m)}$$

$H_0 := _{.912} \ e^{-1}$ -

$t_s := h/V_s = .8$ - time of full vaporization (s)

$t_c := H_3/V_0 = .25$ - time of down flow of the film at the distance of vaporization (s)

$H_4 := t_s \ V_0 = -2 \ e^{-1}$ - real distance of full film vaporization (m)

$H := H_0 + H_4 = .112$ - vaporizer panel height (m)

$V_s := .5 \ H \ h = .67 \cdot 10^{-5}$ vaporized water film volume for one tube (m$^3$)

$M_l := V_s/V_1 = .6 \ e^{-2}$ - vaporized water film mass for one tube (kg)

$M_d := M_l / t_s = .8 \ e^{-2}$ - vaporizing water film mass velocity for one tube (kg/s)

**Heat transfer in vapor surface condensation. Conditions of the process**

$M_c := .2 \ e^{-1}$ - supposed mass velocity of condensate generation on condenser surface (kg/s)

$S := 3 \cdot 0.5H = 0.17$ - one condenser panel area (m$_2$)

$$Q := \frac{M_c r}{S_p} = 296412.8 \text{ - heat flow, generated in condenser wall by vapor, while condensing on it (W/m}^2\text{).}$$

$$R := \frac{3 M_c H}{S_p \mu_1} := 39.9 \text{ - Reynolds number for condensate flow down vertical condenser wall}$$

$$G_a := \frac{g 3^3 H^3}{\nu_l^2} = .37 \cdot 10^{-12} \text{ - Grasshoff number for condensate flow down vertical condenser wall}$$

$N_3 := .32 \ e^{-1} \ G_a^{1/3} \ R_3^{1/4} \ Pr_1^{1/2} = 1204.78$ - Nusselt number for condensate flow down vertical condenser wall

$$A := \frac{N_3 \lambda_1}{3H} = 2249.8 \text{ - efficiency of heat transfer from condensate to condenser wall (W/m}^2 \text{ K)}$$

$T_h := 20 + 273$ - the temperature of cold water in condenser

$Q_3 := a_{c1}(T_{i2} + T_h) \ 3 \cdot H \cdot 0.5 = 15180.3$ - the heat, transferred by condensate to condenser (W)

$M_{c1} := Q_3/r = .6 \cdot 10^{-2}$ - real mass velocity of condensate generation for one side of condenser panel (kg/s)

$M_{c2} := 4 M_{c1} = .2 \cdot e^{-1}$ - mass velocity of condensate generation for all condenser panels (kg/s)

**The determination of cold source parameters for condenser and heat transfer from vapor to condenser conditions**

$T_c := 30 + 273$ - cooling water, when leaving condenser, temperature (K)

$dT_c := 10$ -temperature difference between water at the inlet of cooling water and water in the outlet of condenser.

$G_3 := \dfrac{Q_3}{c_{pl} dT_c} = .36$ - mass flow rate of cooling water for one condenser panel (kg/s)

$d_3 := .16\text{-e}^{-1}$ condenser panel width (m)

$V_3 := \dfrac{G_3 v_1}{3 H d_3} = .67\text{-e}^{-1}$ - the velocity of cold water in condenser (m/s)

$R_4 := \dfrac{V_3 d_3}{v_1} = 1071.34$ - Reynolds number for cold water, moving in condenser tube.

$N_4 := .37 \cdot e^{-1} R_4^{.75} Pr_1^{4} \left(\dfrac{Pr_1}{Pr_2}\right)^{.11} = 14.74$ - Nusselt number for cold water laminar flow in condenser tube

$A : \dfrac{N_4 \lambda_1}{d_3} = 580.7$ - coefficient of heat transfer from condensate to cold water in condenser (W/m$^2$ K).

$dT : \dfrac{T_{i2} - T_c - (T_{i2} - T_h)}{\ln\left(\dfrac{T_{i2} - T_c}{T_{i2} - T_h}\right)} = 34.7$ - mean logarithm of temperature difference between condensate and cooling water in condenser

$L_{c4} := \dfrac{Q_3}{a_{c4} dT_{cl}(6H + 2d_3)} = 1.06$ - condenser tube length (smooth wall) (m)

$L : \dfrac{Q_3}{a_{c4} dT_{cl}(12H + 2d_3)} = .54$ - overall length of condenser panel with gilled inside tubes of gill step $d_3 = 0.016$m

and gill height - 0.008m

Contrary to common practice of water vaporization in desalination installations, when processes of heating feeding seawater in heat exchangers and vaporizing it after heating on vaporizer walls are separated, in this desalination device processes of heating and vaporizing occur in one vaporizer unit. Preheating of cold seawater, flowing as thin film (of 0.002m thickness) down vertical vaporizer wall, up to 40-60°C occur due to heat exchange with vaporizer wall, which in its turn is heated by hot water of 90°C, heated by separate heat source. Calculations show, that in laminar flow seawater film may be heated up to necessary temperature, when passing some 0.25-0.32m from the upper end of vaporizer panel. But after it passes 0.057m its laminar flow becomes turbulent, what greatly intensifies the heat exchange between water film and vaporizer wall. In such mode water film heats up to necessary temperature after passing only 0.033m from the place, where turbulence started. The transit into turbulence and the start of vaporization occur nearly simultaneously. Complete evaporation of seawater film occur in 0.002m from the place of turbulent heating up. Thus, overall height of vaporizer panel should not be less than 0,11m. In this case vapor generation mass velocity consist of 0.008kg/s, that exceeds preliminary heat exchange calculations. The heat transfer from condensate to cold feeding water is enhanced by gills too.

Determination of heat balance and output capacity in desalination installation

$T_{npvl} := 65$ - rated feeding seawater temperature (°C)

$T_{rvl} := 35$ - rated brine temperature (°C)

$T_{pvl} := 20$ - seawater temperature at the installation inlet (°C)

$$T_{pxl} := \frac{T_{rvl} + T_{mvl}}{2} = 27.5 \text{ - rated feeding water, entering condenser, temperature (°C)}$$

$T_{cpvl} := 40$ - feeding water, leaving condenser, temperature (°C)

$G_{mvl} := .2$ seawater flow rate (kg/s)

$$D_{d1} := \frac{c_{pv}(T_{npvl} - T_{rvl})G_{mvl}}{r_i} = .101 \cdot e^{-1} \text{ - distillate generation capacity with}$$

parameters above (kg/s).

$I_{pv1} := C_{pv} T_{pv1} = 115500.0$ - feeding water, entering condenser, enthalpy (J/kg)

$I_{pv2} := C_{pv} T_{cpv1} = 16800.0$ - feeding water, leaving condenser, enthalpy (J/kg)

$I_{pv3} := c_{pv} T_{npv1} = 273000.0$ - heated feeding water enthalpy (J/kg)

$$G := \frac{D_{d1} r_i}{i_{pv2} - i_{pv1}} = .48 \text{ - flow rate of feeding water and recycling brine, where } i_{pv1} \text{ and } i_{pv2} \text{ - its enthalpies before and}$$

after condenser (kg/s)

$i_{rv} := C_{pv} T_{rv1} = 147\,000.0$ - brine enthalpy (J/kg)

$$D_d := \frac{G_{pv}(i_{pv3} - i_{rv})}{r_1 - i_{rv}} = .257 . e^{-1} \text{ - the installation capacity with feeding water rate}$$

$G_{pv}$ and brine enthalpy $i_{rv}$, given above (kg/s)

$G_{rv} := G_{pv} - D_d = .454$ - brine flow rate - (kg/s)

**Heat balance and flow rates with brine recycling**

$i_{mv} := c_{pv} T_{mv1} = 84000.0$ - seawater enthalpy (J/kg)

$$G_{rvr} := \frac{G_{pv}(i_{pv1} - i_{mv})}{i_{rv} - i_{mv}} \text{ - brine flow rate for in recycling (kg/s)}$$

$G_{mv} := G_{pv} - G_{rvr} = .24$ - seawater flow rate (kg/s)

$G_{mv} := D_d + G_{rv} = .48$ - seawater flow rate, as a sum of distillate flow rate and brine flow rate (kg/s)

**Heat balance while heating feeding water by vapor or by hot water in pre-heater.**

$i_{pp} := c_{pp} T_{nv1} = 121550.0$ - enthalpy of vapor in condenser and in pre-heater (J/kg)

$i_{cp} := c_{pv} T_{pv1} = 115500.0$ - seawater enthalpy (J/kg)

$$G_{pp} := \frac{G_{pv}(i_{pv3} - i_{pv2})}{i_{pp} - i_{cp}} = 8.3 \text{ - vapor flow rate pre-heating of feeding water, with}$$

given values of feeding water in pre-heater enthalpy $i_{pv3}$, feeding water after pre-heating enthalpy $i_{pv2}$, vapor enthalpy ipp and vapor condensation enthalpy $i_{cp}$ (kg/s)

$T_{nv} := 60$ - the temperature of heating water in pre-heater (°C)

$I_{vp} := C_{pv} T_{npv1} = 273000.0$ - heating water in pre-heater enthalpy (J/kg)

$I_{mv} := C_{pv} T_{nv} = 252000.0$ - heating water enthalpy after heating the feeding water (J/kg)

$$G_{vp} := \frac{G_{pv}(i_{pv3} - i_{pv2})}{i_{vp} - i_{nv}} = 2.4 \text{ - heating water flow rate in pre-heater (kg/s)}$$

$$I_{pv2} := \frac{D_{d1} r_i + G_{pv} i_{pv2}}{G_{pv}} = 168000.0 \text{ - feeding water enthalpy after pre-heating with given values of } D_{d1} \text{ and } G_{pv1} \text{ (J/kg)}$$

**Vapor heat parameters changes after passing compressor**

Adiabatic mode

$R_g$ := .287 - gas constant

$n_a$ := 1.4 - relative adiabatic coefficient of vapor

$T_{ip1}$ = 60 - overheated vapor temperature, when inside vaporizer.

$P$ := .5·e$^{-1}$ - vapor inside vaporizer chamber pressure (bar)

$P_{p2}$ := 1 - the pressure of vapor in condenser chamber (bar)

$M_u$ := .8 - compressor efficiency

$M_{ks}$ := 36 - compressor capacity (kg/hour)

$$T_{cp1} := \frac{E_{us1}(\frac{P_{p2}}{P_{p1}})^{(1.4-1)}}{1.4} = 142.0 \text{ vapor temperature in the end of adiabatic compression}$$

$T_{cp2} := T_{ip1} + (T_{cp1}-T_{iP1}) M_u = 125.64$ - real vapor temperature in the end of compression

$$E_{cs} := 1.2R_g T_{ip1}\left(\frac{(\frac{P_{p2}}{P_{p1}})^{(1.4-1)}}{1.4} - 1\right) = 51.66 \text{ - the work to compress vapor (kJ/kg)}$$

$$N_c := \frac{M_{ks}E_{cs}}{.85M_u 3600} = .76 \text{ - compressor power (kW)}$$

**Determination of power consumption in desalination installation**

$W_1$ := 6.3·10$^4$ - the heat source capacity (W)

$$B := \frac{G_{pp}(i_{pp} - i_{cp})}{.8 \cdot W_i} = 1 \text{ - the efficiency of heat source usage in desalination installation}$$

**The heat solution of vaporizer**

The heat and mass balance in vaporizer. Physical dimensions of vaporizer

$dT_{c1} := T_{npv1} - T_{rv1} = 30$ - temperature difference between heated feeding water and the brine

$m_{up}$ := 0.98 - the heat efficiency of vaporizer

$$g := \frac{c_{pp}T_{upv} + r_i}{dT_{ct}c_{pv}m_{up}} = 21.2 \text{ - feeding water mass, needed for generating of 1 kg of distillate (kg/kg)}$$

$$dl := \frac{g_{pv}dT_{cl}}{T_{rv}} = 18.2 \text{ - the vapor mass, needed for producing 1 kg of distillate}$$

(kg/kg)

$$G := \frac{G_{pv}(T_{pv1} - T_{mv1})}{T_{rv1} - T_{nv1}} = 0.24 \text{ - the brine consumption for recycling (kg/s)}$$

$W_{np}$ := 1.0 - the vapor volume tension (m$^3$/m$^3$ ·s)

$S_{ip}$ := .8 - vaporization area (m$^2$)

$$V_{clp} := \frac{D_{dl}V_{p6}}{W_{np}} = 0.42 \text{ - vaporization chamber area (m}^2\text{)}$$

**The heat solution of condenser**

$D_m$ := 10·10$^{-3}$ - condenser tube internal diameter (m)

$Q_{kd}$ := $D_{d1}$ d1 ($c_{pp}$ $T_{npv1}$ -$C_{pv}$ ($T_{pv1}$ -3)) = 3421.0 - heat transfer from vapor to feeding water in one condenser unit (W)

$$ dT : = \frac{dT_{ct}}{2.3 \ln(\dfrac{T_{npv1} - T_{pv1}}{T_{npv1} - T_{cpv1})}} = 32.17 \text{ mean logarithm of temperature difference} $$

between vapor and feeding water

$V_{pv}$:= .5 - - feeding water in condenser tube average velocity (m/s)

$a_{lf1}$ := 3·10$^3$ - heat transfer efficiency at vapor condensation on condenser surface (W/m$^2$·K)

$a_{lf2}$ := 2·10$^3$ - heat transfer from condenser wall to feeding water efficiency (W/m$^2$·K)

$$ K := \frac{a_{lf1}a_{lf2}}{a_{lf1} + a_{lf2}} = 1200.0 \text{ - heat conductance (W/m}^2\text{·K) } b_{et} := .8 \text{ - coefficient for deposits on condenser walls} $$

$K_{tb}$ := $K_t$ $b_{et}$ = 960.0 - heat conductance, with deposits taken into account (W/m$^2$·K)

$$ F_k := \frac{Q_{kd}}{K_{tb}dT_m} = 0.11 \text{ - calculated condenser area (m}^2\text{)} $$

$$ N_{ot} := \frac{16G_{pv}10^{-3}}{3.14d_m^2 V_{pv}} = 48.9 \text{ - condenser tubes quantity needed} $$

$I_{tr}$ := 0.5 - tube length in vapor space (m)

$F_{k1}$ := 3.14·2 $d_m$ $I_{tr}$ $N_{ot}$ = 1.53 - actual condenser surface area (m$^2$)

$F_{k2}$ := 10 $F_k$ = 1.1 - actual vaporizer surface area (m$^2$)

**The heat solution of feeding water pre-heater**

$Q_{pp}$ := $G_{pv}$ $c_{pv}$ ($T_{npv1}$-$T_{pv1}$) = 75600 - Heat quantity, needed for feeding water pre-heating (W)

$M_{ut}$ := 0.97 - the heat efficiency of pre-heater

$T_{gv}$ := 70 - water temperature in pre-heater

$Q_{gv}$:= $C_{pv}T_{gv}$ = 294000 - Heat quantity, supplied by pre-heater (W)

$$ G_{gv} := \frac{Q_{pp}}{Q_{gv}M_{ut}} = 0.27 \text{ - hot water flow rate in pre-heater ((kg/s)} $$

$T_{cpv1}$ := 40

$$ dT_{gv} : = \frac{T_{npv1} - T_{pv1}}{2.3 \ln(\dfrac{T_{gv1} - T_{cpv1}}{T_{gv} - T_{npv1}})} = 9.1 \text{ - mean logarithm of temperature difference} $$

$V_{gv}$ := 1.5 - water in pre-heater tubes velocity (m/s)

$$ N_{gv} := \frac{8G_{pv}10^{-3}}{3.14d_m^2 V_{gv}} = 8.15 \text{ - the number of tubes in pre-heater} $$

$$ F_{gv} := \frac{Q_{pp}}{10K_{tb}dT_{gv}} = 0,87 \text{ - calculated pre-heater surface area (m}^2\text{)} $$

$$L_{tr} := \frac{F_{gv}}{3.14 d_m N_{gv}} \cdot = 3.38 \text{ - the pre-heater tube length (m)}$$

$F_{gv1} := 3.14\, d_m\, L_{tp}\, N_{gv} = 0.87$ - actual pre-heater surface area (m$^2$)

Accurate calculations above demonstrate coincidence of characteristic dimensions of vaporizer and condenser with that of estimation calculations in orders of values. Besides, by these calculations the compressor power (of order 1.5kW), characteristic dimensions of pre-heater (area about 0.8m$^2$), the feeding water pre-heater power (63kW), was determined.

Thus, complete calculations of main parameters of two-chamber desalination device prototype, with low pressure vaporizer and built up pressure in condenser, demonstrates, that its desalination capacity, while working with salt water at the temperatures of 20 - 60°C, greatly exceeds that of one chamber vacuum desalination device. For example, proposed desalination device, with brine recycling, capacity of potable water reaches about 0.25kg/s, and falls to 0,11kg/s without brine recycling, when the temperature of salt water is 60°C. When the temperature of salt water falls to 20°C, distillate output lowers down to 0.015kg/s. Distillate temperature in the process reaches 23°C. But, even this, lessened capacity of proposed device is far bigger, than that of one chamber vacuum desalination devices of similar dimensions of vaporizer and condenser, pre-heater power and feeding water at the inlet parameters. Besides, in proposed device preheating of feeding water is not used, and energy for vaporizing and condensation processes is received from compressor. All additional energy is acquired from sea(salt)water. Thus, the proposed method of distillate producing cuts the expenses.

**Main parameters, mode of action, capacity and expenses**

| | |
|---|---|
| Height of installation | 0.75 m |
| Diameter of installation | 0.65m |
| Compressor power | 3kW |
| Vaporizer/condenser unit height | 0.5m |
| Initial pressure in vaporizer chamber | 0.03bar |
| Vaporized water vapor pressure | 0.1bar |
| The pressure of water vapor in condenser | 1.1bar |
| Condenser-vaporizer pressure difference | 1 bar |
| Seawater temperature, when producing distillate | 20°C |
| Vaporized vapor temperature | 20°C |
| Condensing vapor temperature | 30°C |
| Brine temperature | 10°C |
| Temperature difference between condensing vapor and vaporizer walls | 20°C |
| Seawater flow rate in distillate production | 0.1kg/s |
| Distillate production capacity | 0.015kg/s |
| Seawater temperature, when producing potable water | 60°C |
| Pre-heater power, when producing potable water | 63kW |
| Seawater flow rate in potable water production | 0.5kg/s |
| Potable water production capacity, with brine recycling | 0.25kg/s |
| Potable water production capacity, without brine recycling | 0.11kg/s |
| The price of 1 m$^3$ of distillate | 105rubles |
| The price of 1 m$^3$ of potable water, without preheating and without brine recycling | 15rubles |
| The price of 1m$^3$ of potable water, with preheating but without brine recycling | 570rubles |

The price of 1m$^3$ of potable water, with brine recycling falls down by a half.

**Claims**

1. A seawater desalination method, comprising seawater pre-heating, heating vapor by a pump, creating by a pump pressure difference between a vaporizer and a condenser cavities with higher pressure in vaporizer cavity, seawater vaporizing under increased pressure, vapor injection from vaporizer cavity into condenser cavity, water vapor condensation, additional seawater heating by condensing vapor, **characterised in that** vaporization cavity is communicated with condensation cavity via input and output channels of a pump, with output channel opening into condensation cavity, **in that** seawater is fed from outside, when vapor and air mixture is pumped out of vaporizer, creating thus pressure difference between vaporizer and condenser, with lower pressure in condenser cavity and the air-vapor mixture is pumped into condenser cavity, while feeding seawater due to said pressure difference enters salt water tank and further on through vaporizing tubes located into vaporizing cavity as thin water film, flowing down outer walls of condenser tubes located into condenser cavity, what leads to vaporizing of said water film under lowered pressure at the temperature of said feeding seawater and to cooling of inner walls of condenser tubes due to said vaporizing of thin seawater film and condensation of heated up by said pump vapor is carried out with built up pressure of said vapor in condensation cavity and said condensation follows after lowering down said vapor temperature, due to heat transfer from vapor to inner walls of condenser tubes and from outer walls of said tubes to thin seawater film and feeding seawater in vaporizer tube, while said heat transfer is enhanced due to opposite directions of seawater and vapor flows and simultaneously vapor pressure is built up till critical values of said pressure and temperature are reached, thus creating for vapor condensation conditions, complying with "dew point" of saturated vapor and generated distillate and brine are output through compensation tanks, fitted with pressure controllers, and it is carried out by periodical opening and closing of pressure valve and connected with it hydrodynamic valves.

2. The method of seawater desalination according to claim 1, **characterized in that** "dew point" in condensation cavity is reached in presence of air and gases, dissolved in salt or seawater.

3. The method of seawater desalination according to claim 1 or 2, **characterized in that** to obtain potable water additional heating of seawater in vaporizing cavity is carried out.

4. The method of seawater desalination according to one of the claims 1 to 3, **characterized in that** the brine from vaporizer and the distillate from condenser are output due to the pressure difference between condenser and the surroundings via separate channels, with pressure in condenser cavity regulated by pressure valve.

5. A device for seawater desalination, comprising pump, placed over vaporizer and condenser, pre-heater, coaxially placed cylinder cases with gills and covers and vaporization and condensation cavities, communicated via a common channel, **characterized in that** said pump is placed between cavities and pump input is directed into vaporization cavity, while its output is connected with condensation cavity and said pump pumps seawater vapor from vaporizer into condenser, while vaporizer and condenser are the structural unity, comprising of multitude of "tube in the tube" units, the upper parts of which are sealed, with the hole in the center open to vaporizer cavity, and the lower ends of inner tubes open to seawater, while lower ends of outer tubes open into condenser cavity.

6. The device for seawater desalination according to claim 5, **characterized in that** to obtain potable water the pre-heater is added.

7. The device for seawater desalination according to claim 5 or 6, **characterized in that** it is provided by outlet tubes with hydrodynamic pressure valves to output the distillate from condenser cavity and the brine from vaporizer cavity and said tubes are connected via valve pressure switcher and the pressure tube from condensation cavity.

8. The device for seawater desalination according to one of the claims 5 to 7, **characterized in that** the device is provided with pressure compensation tanks for the brine and the distillate, which are connected to outlets for the brine and the distillate via valve switchers.

9. The device for seawater desalination according to one of the claims 5 to 8, **characterized in that** the device is provided with valve pressure switcher in condenser cavity to alternatively control hydrodynamic pressure valves and the output of the brine and the distillate.

# Fig.1

Fig.2

Fig.3

**European Patent Office**

**PARTIAL EUROPEAN SEARCH REPORT**

which under Rule 45 of the European Patent Convention shall be considered, for the purposes of subsequent proceedings, as the European search report

Application Number

EP 06 00 6977

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI Week 199820<br>Derwent Publications Ltd., London, GB; AN 1998-229023<br>XP002401578<br>-& RU 2 090 511 C1 (MALTSEV V V)<br>20 September 1997 (1997-09-20)<br>* abstract *<br>----- | 1-9 | INV.<br>C02F1/04<br><br>ADD.<br>C02F1/08<br>C02F103/08 |
| X | AU 60843 65 A (POTTHURST, JOHN E. JR)<br>5 January 1967 (1967-01-05)<br>* figures 1,2 *<br>* page 4, column 1 - page 7, column 1 *<br>* page 14, line 3 - page 15, line 3 *<br>----- | 1-9 | |
| A | US 2 976 224 A (GILLILAND EDWIN R)<br>21 March 1961 (1961-03-21)<br>* figure 2 *<br>----- | 1-9 | |
| A | AU 547 932 B2 (PETREK J P; CANTRELL C M)<br>14 November 1985 (1985-11-14)<br>* the whole document *<br>----- | 1-9 | |

| TECHNICAL FIELDS SEARCHED (IPC) |
|---|
| C02F |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 4 October 2006 | Borello, Ettore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**INCOMPLETE SEARCH**
**SHEET C**

Application Number

EP 06 00 6977

```
Claim(s) searched incompletely:
       1-4

Reason for the limitation of the search:

The subject-matter of independent claim 1 is not clear (Art. 84 EPC):
whilst at lines 3-4 of page 31 it is mentioned "higher pressure in the
vaporizer cavity", at lines 17-18 page 31 it is mentioned "vaporizing of
said water under lowered pressure". This makes particularly burdensome
for a skilled person to establish the subject-matter for which protection
is sought. The search was performed only for those process conditions,
which can be understood from the whole description, i.e. the vaporizing
pressure is lower than the condensing pressure due to the action of a
gas/vapour compressor, which is used to transfer the gas/vapour mixture
from the vaporizer cavity to the condensation cavity.
```

**ANNEX TO THE EUROPEAN SEARCH REPORT
ON EUROPEAN PATENT APPLICATION NO.**

EP 06 00 6977

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2006

| Patent document cited in search report | | Publication date | Patent family member(s) | | Publication date |
|---|---|---|---|---|---|
| RU 2090511 | C1 | 20-09-1997 | NONE | | |
| AU 6084365 | A | 05-01-1967 | NONE | | |
| US 2976224 | A | 21-03-1961 | FR 1220950 A<br>GB 877942 A<br>NL 121841 C | | 30-05-1960<br>20-09-1961 |
| AU 547932 | B2 | 14-11-1985 | AU 7904981 A | | 30-06-1983 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2090511MKLC02 A, Maltsev V.V.

- RU 2090511MKIC02 A, Maltsev V.V.